# FASCICULE DE BREVET EUROPEEN

(11) **EP 1 307 350 B1**
(45) Date de publication et mention de la délivrance du brevet: **26.01.2005**
(21) Numéro de dépôt: 01956559.7
(22) Date de dépôt: 25.07.2001
(51) Int. Cl.: B60C 9/22, B60C 15/00, B60C 13/00

(54) **PNEUMATIQUE POUR VEHICULE DEUX ROUES COMPORTANT UN MOYEN ANTI-VIBRATION**
MOTORRADREIFEN MIT ANTISCHWINGUNGSMITTEL
TYRE FOR TWO-WHEELER COMPRISING ANTI-VIBRATION MEANS

(30) Priorité: 31.07.2000 FR 0010290
(43) Date de publication de la demande: 07.05.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PROST, Pascal, F-63200 Riom (FR); VALLE, Alain, F-63118 Cebazat (FR)
(74) Mandataire: Le Cam, Stéphane
(86) Numéro de dépôt international: PCT/EP2001/008567
(87) Numéro de publication internationale: WO 2002/009956

(56) Documents cités:
- EP-A- 0 976 536
- EP-A- 1 080 948
- GB-A- 992 631
- PATENT ABSTRACTS OF JAPAN vol. 008, no. 140 (M-305), 29 juin 1984 (1984-06-29) & JP 59 038104 A (YOKOHAMA GOMU KK), 1 mars 1984 (1984-03-01)

## Description

La présente invention concerne les pneumatiques. Plus particulièrement, elle concerne un pneumatique, notamment pour véhicule de type deux roues, comportant un moyen anti-vibration.

Dans les véhicules de type deux roues, tels les motocyclettes, scooters et autres, les différents types de vibration telles celles provenant du moteur, du roulement, des imperfections de la route, etc, sont difficiles à amortir, de sorte qu'elles sont pour la plupart transmises aux occupants du véhicule. Ces vibrations peuvent intervenir dans les directions verticales, longitudinales ou transversales. Il peut en résulter un certain inconfort, pouvant lui-même être une source de fatigue si l'utilisation est prolongée, en particulier si les niveaux de vibrations sont plutôt élevés.

Les constructeurs de tels véhicules mettent donc en oeuvre des moyens considérables pour s'attaquer au problème des vibrations. Les fabricants des divers organes du véhicule ne sont pas en reste puisque chacun peut contribuer dans une plus ou moins grande mesure à atténuer ou amortir les vibrations induites, ou voire mieux, les éliminer à la source. A ce titre, les fabricants de pneumatiques peuvent jouer un rôle déterminant en ce qui concerne les vibrations dues au roulement et aux imperfections de la route. Le pneumatique avant peut constituer à ce titre un élément clé.

Le renforcement des carcasses des pneumatiques est à l'heure actuelle constitué par une ou plusieurs nappes (désignées classiquement « nappes carcasses » de par le procédé de fabrication sous la forme de produits semi-finis en forme de nappes), pourvues de renforts filaires pouvant être radiaux. L'ancrage ou le maintien de ces nappes ou renforts s'effectue, de façon traditionnelle par un retournement d'une portion de nappe autour d'une tringle disposée dans le bourrelet du pneumatique.

Par ailleurs, il existe aujourd'hui des pneumatiques qui ne disposent pas du traditionnel retournement de nappe carcasse autour d'une tringle, ni même d'une tringle, selon le sens traditionnel de cet élément. Par exemple, le document EP 0 582 196, décrit une façon d'agencer une structure de renfort de type carcasse dans les bourrelets, en disposant de façon adjacente à ladite structure de renfort des filaments circonférentiels, le tout étant noyé dans un mélange caoutchoutique d'ancrage ou de liaison, de préférence à haut module d'élasticité. Plusieurs agencements sont proposés dans ce document. Ce document fait par ailleurs référence à des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau ayant une forme permettant d'obtenir directement un profil s'apparentant au profil final du pneumatique en cours de fabrication. Ainsi, dans ce cas, plutôt que des « nappes carcasses » au sens classique, on retrouve plus spécifiquement des «renforts de type carcasse ». Cette dénomination, qui en fait désigne les renforts de l'un ou l'autre type, sera utilisée dans le présent document.

Le document EP 0 976 536 décrit également une façon d'agencer une structure de renfort de type carcasse dans les bourrelets, en disposant de façon adjacente à ladite structure de renfort des filaments circonférentiels, le tout étant noyé dans un mélange caoutchoutique d'ancrage ou de liaison.

La présente invention vise donc à fournir un pneumatique, notamment un pneumatique pour roue avant de véhicule de type deux roues, présentant des performances améliorées en regard du comportement vibratoire, notamment du shimmy.

Pour ce faire, l'invention prévoit un pneumatique pour véhicule à deux roues comportant :
- au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, la structure de renfort s'étendant circonférentiellement depuis les bourrelets vers lesdits flancs, les flancs rejoignant radialement vers l'extérieur une bande de roulement dont le rapport Ht/Wt est supérieur à 0.15 ;
- une zone d'ancrage de la structure de renfort,
- une zone de transition correspondant sensiblement au passage de la portion latérale de la bande de roulement au flanc ;
- un moyen anti-vibration disposé circonférentiellement dans ladite zone de transition et s'étendant radialement d'une part sensiblement radialement extérieurement vers le sommet et d'autre part sensiblement radialement intérieurement dans le flanc ; ledit moyen anti-vibration comprenant au moins un alignement de fils sensiblement circonférentiels.

La zone de transition, à partir de laquelle le rayon défini par le profil méridien de la bande de roulement change brusquement pour interrompre le parcours de la bande de roulement, constitue une particularité majeure du pneumatique pour véhicule deux roues. Aucun point d'un profil classique de pneumatique pour véhicule à quatre roues ou plus ne se compare à ce dernier. Ce dernier type de pneumatique, de par la conception des véhicules qu'il équipe, dispose en général d'une bande de roulement sensiblement plate, ou de faible rayon.

Pour un véhicule à deux roues, la zone de contact entre le sol et le pneumatique est sensiblement étroite par rapport à la largeur de la bande de roulement. Cette zone est par ailleurs mobile le long du profil de la bande de roulement, en fonction de l'inclinaison de la motocyclette. Cela est d'autant plus important que les contraintes dynamiques différent fortement entre les véhicules à deux roues et les autres types de véhicules. Cela justifie par exemple la présence de pneumatique différents pour la roue avant et la roue arrière d'un nombre important de motocyclettes.

De façon classique, on évite en général d'augmenter la rigidité de la zone de transition ou d'inflexion puisque l'ensemble des rigidités est alors affectée. Cela se traduit par une diminution du confort et de la durabilité qui peuvent atteindre des niveaux inadmissibles. Selon l'invention, la présence du moyen anti-vibration à un endroit précis et sa structure originale, permettent d'agir en particulier sur la rigidité transversale, sans affecter de façon significative les rigidités radiales et longitudinales. Il s'agit là d'une caractéristique majeure, permettant enfin de lutter de façon véritablement efficace contre le phénomène du shimmy. L'objet de la présente invention est donc destiné avant tout pour un usage sur la roue avant d'un véhicule deux roues. Il peut par ailleurs également être utilisé pour la roue arrière ou les deux.

En fonction du matériau constituant le ou les fils de l'enroulement du moyen anti-vibration (par exemple aramide, métal, fibre de verre, polyester, etc), des types de mélanges caoutchoutique dans lesquels les fils sont disposés, de la densité des fils et du nombre d'enroulement, on agit sur la rigidité transversale du pneumatique tout en conservant sensiblement une certaine stabilité des autres rigidités du pneumatique telles que les rigidités verticales et longitudinales. Le moyen anti-vibration permet donc un découplage de la rigidité transversale par rapport aux autres rigidités. On obtient par ailleurs des résultats favorables pour des vibrations de type guidonnage (kick-back), louvoiement (waving), stabilité du profil à la centrifugation (usure, stabilité), etc.

De manière avantageuse, le moyen anti-vibration assure une connexion mécanique ou coopération entre la portion latérale de la bande de roulement et la portion du flanc dans lesquelles ledit moyen est disposé. C'est cette connexion mécanique qui contribue à rigidifier le pneumatique dans le sens transversal. On agit de la sorte directement sur l'amplitude et la fréquence du shimmy.

De manière avantageuse, ledit moyen anti-vibration comprend au moins un fil aligné sensiblement circonférentiellement, ou une série de fils alignés et répartis circonférentiellement. De préférence, l'angle des fils est sensiblement de 0° par rapport à la direction circonférentielle. Les fils forment ainsi des alignements pouvant prendre une multiplicité de formes. Les alignements de fils peuvent également être agencés et fabriqués de plusieurs façons. Par exemple, un alignement peut avantageusement être constitué d'un seul fil enroulé (sensiblement à zéro degré) en spirale sur plusieurs tours, de préférence depuis le plus petit diamètre vers le plus grand diamètre. Il peut également être constitué de plusieurs fils concentriques posés l'un dans l'autre, formant une superposition d'anneaux de diamètres progressivement croissants. Il n'est pas nécessaire d'ajouter un mélange de caoutchouc pour assurer l'imprégnation du fil ou des enroulements circonférentiels de fil.

Grâce à l'utilisation de différents types de fils, avec différentes propriétés ou différents matériaux, chacun à un endroit bien spécifique, on peut optimiser les caractéristiques du flanc et/ou de la zone basse du pneumatique.

La présente invention prévoit également l'utilisation d'un moyen anti-vibration substantiellement périphérique pour diminuer la génération de vibrations de type shimmy dans un pneumatique pour véhicule à deux roues comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement dont le rapport Ht/Wt est supérieur à 0.15, la structure de renfort s'étendant circonférentiellement depuis les bourrelets vers lesdits flancs, ledit pneumatique comportant également une zone de transition correspondant sensiblement au passage de la portion latérale de la bande de roulement au flanc, ledit moyen anti-vibration étant disposé circonférentiellement dans ladite zone de transition et s'étendant radialement d'une part sensiblement radialement extérieurement vers le sommet et d'autre part sensiblement radialement intérieurement dans le flanc.

Dans le cadre de cette utilisation, le moyen anti-vibration comprend avantageusement au moins un alignement de fils sensiblement circonférentiels. Par ailleurs, ce moyen anti-vibration assure avantageusement une connexion mécanique entre la portion latérale de la bande de roulement et la portion du flanc dans lesquelles ledit moyen est disposé. C'est cette connexion mécanique qui contribue à rigidifier le pneumatique dans le sens transversal. On agit de la sorte directement sur l'amplitude et la fréquence du shimmy.

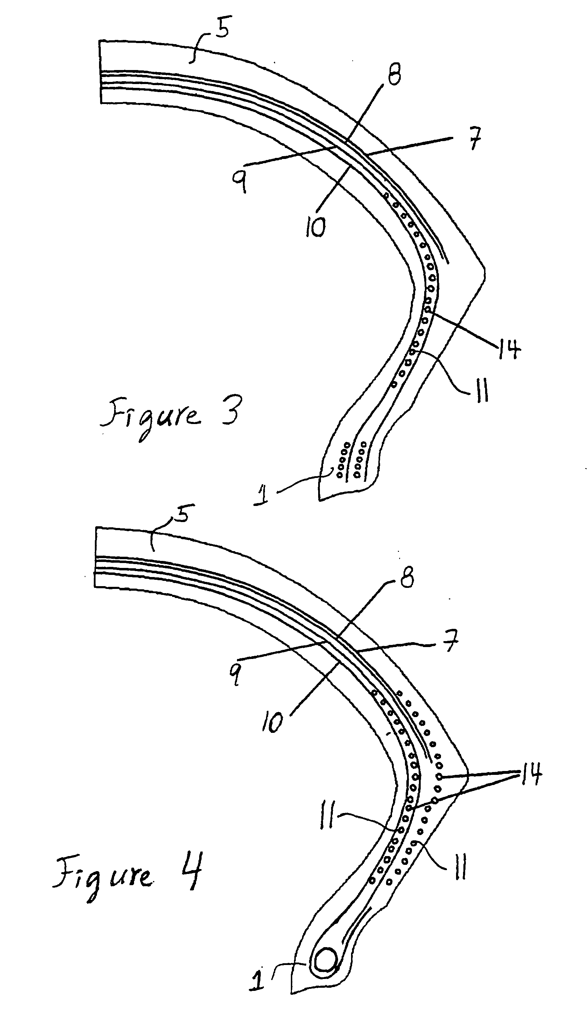

Un tel moyen anti-vibration est avantageusement utilisé dans un pneumatique dans lequel la structure de renfort de type carcasse est ancrée dans le bourrelet grâce à au moins un agencement de fils d'ancrage suivant un parcours sensiblement circonférentiel disposé de façon sensiblement adjacente à ladite structure. Cependant, le moyen anti-vibration peut également être utilisé avec un pneumatique classique, comportant une tringle autour de laquelle une carcasse est retournée, tel qu'illustré par exemple à la figure 4.

Le moyen anti-vibration est avantageusement constitué d'au moins un fil aligné sensiblement circonférentiellement ou encore d'une série de fils alignés et répartis circonférentiellement. Un alignement peut comprendre un seul ou plusieurs fils. Les alignements de fils peuvent être agencés et fabriqués de plusieurs façons. Par exemple, un alignement peut avantageusement être constitué d'un seul fil enroulé (sensiblement à zéro degré) en spirale sur plusieurs tours, de préférence depuis le plus petit diamètre vers le plus grand diamètre. Il peut également être constitué de plusieurs fils concentriques posés l'un dans l'autre, formant une superposition d'anneaux de diamètres progressivement croissants. Il n'est pas nécessaire d'ajouter un mélange de caoutchouc pour assurer l'imprégnation du fil ou des enroulements circonférentiels de fil.

Afin de contribuer à optimiser la rigidité latérale du pneumatique, on peut aussi prévoir un alignement de fils simple, double, voire triple, selon le type de pneumatique et le comportement vibratoire souhaité.

Une partie ou la totalité des fils de l'alignement est avantageusement non métallique, et de préférence de type textile, tels des fris à base d'aramide, de polyester aromatique, ou encore d'autres types de fils de divers modules tels des fils à base de PET, PEN, PVA, fibre de verre, nylon, rayonne, etc, ou encore de type hybride, par exemple de type aramide/nylon.

De manière avantageuse, au moins un alignement comporte plusieurs fils dont au moins deux ont des caractéristiques différentes. On peut également prévoir des fils de nature et/ou caractéristiques différentes dans des alignements distincts.

Par caractéristiques du fil, on entend par exemple ses dimensions, sa composition, ses caractéristiques et propriétés mécaniques (notamment le module ou la ténacité), ses caractéristiques et propriétés chimiques, etc.

De manière avantageuse, les alignements de fils sont disposés de façon à être en contact avec au moins un mélange de gomme à haut module. Dans un exemple avantageux, les alignements sont entourés d'un premier côté par un premier mélange et de l'autre côté par un second mélange.

De préférence, les fils orientés circonférentiellement ne sont pas au contact direct des fils orientés radialement, par exemple ceux de la structure de type carcasse.

La présente invention procure par ailleurs une structure de renforcement pour pneumatique. Il est par ailleurs souhaitable que cette structure se prête aisément à une fabrication automatisée.

La présente invention procure également un type d'agencement des différents éléments constituants d'un pneumatique afin de pouvoir affiner certaines caractéristiques telles la rigidité, la résistance aux impacts, etc.

La présente invention procure enfin une structure de renforcement pour pneumatique qui prend en compte les différents efforts mécaniques en présence dans les différentes zones du flanc et de l'épaule lors du fonctionnement, notamment à pression nominale.

Tous les détails de plusieurs modes de réalisation sont donnés dans la description qui suit, complétée par les figures 1 à 10 où :
la figure 1 est une coupe radiale montrant essentiellement un flanc et un bourrelet d'une première forme d'exécution d'un pneumatique selon l'invention ;
la figure 2 est une coupe radiale montrant essentiellement un flanc et un bourrelet d'une deuxième forme d'exécution d'un pneumatique selon l'invention ;
la figure 3 est une coupe radiale montrant essentiellement un flanc et un bourrelet d'une variante de la forme d'exécution du pneumatique de la figure 2 ;
la figure 4 est une coupe radiale montrant essentiellement un flanc et un bourrelet d'une autre variante de la forme d'exécution du pneumatique de la figure 2 ;
la figure 5 est une coupe radiale montrant essentiellement un flanc et un bourrelet d'une autre variante de la forme d'exécution du pneumatique de la figure 2 ;
la figure 6 est une coupe radiale montrant essentiellement un flanc et un bourrelet d'une autre variante de la forme d'exécution du pneumatique de la figure 2 ;
la figure 7 est une coupe radiale montrant essentiellement un flanc et un bourrelet d'une autre variante de la forme d'exécution du pneumatique de la figure 2 ;
la figure 8 est une coupe radiale montrant essentiellement un flanc et un bourrelet d'une variante de la forme d'exécution du pneumatique de la figure 2 ;
la figure 9 est une coupe radiale montrant essentiellement un flanc et un bourrelet d'une variante de la forme d'exécution du pneumatique de la figure 2 ;
enfin, les figures 10a, 10b et 10c illustrent, à l'aide de graphiques, l'évolution des rigidités d'un pneumatique (sur une base 100) par rapport à une longueur donnée L.

Dans le présent mémoire, le terme "fil" ou filaire désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, n'utilisant avantageusement pas de tringle de type traditionnel, la fonction d'ancrage de la structure de renfort de type carcasse est également assurée.

On sait aussi que, toujours dans l'état de la technique, la même tringle assure en outre une fonction de serrage du bourrelet sur sa jante. Dans les exemples de réalisation décrits dans la présente demande n'utilisant pas de tringle de type traditionnel, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

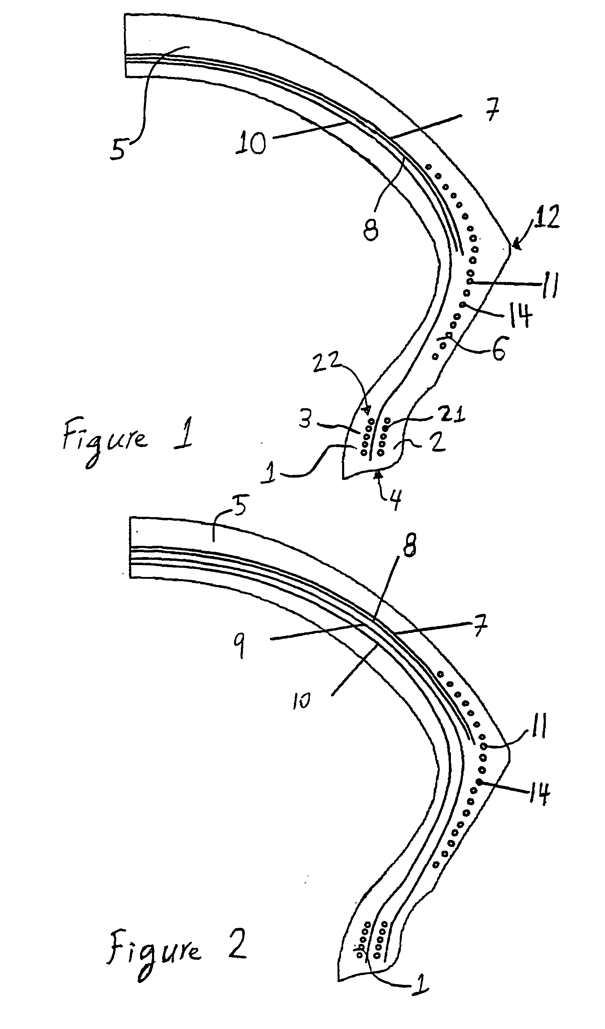

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

La région du sommet 5 comporte de préférence une structure de renfort comme par exemple un agencement de nappes 7 et 8 croisées au sommet.

Afin de positionner les fils de renforcement de façon aussi précise que possible, et pour optimiser l'efficacité de l'enroulement en faisant en sorte que les câbles soient en extension dans le pneumatique, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être modifié lors de la confection.

Des fils circonférentiels 21 agencés de préférence sous forme de piles 22, forment un agencement de fils principaux 20 ou d'ancrage, prévu dans chacun des bourrelets. Ces fils sont de préférence métalliques, et éventuellement laitonnés. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose des fils orientés circonférentiellement. Ceux-ci sont disposés en une pile comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 10 coopèrent avec les bourrelets. Il se crée ainsi un ancrage de ces portions dans lesdits bourrelets. Afin de favoriser cet ancrage, l'espace entre les fils circonférentiels et la structure de renfort est occupé par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange à haut module d'élasticité dans la zone d'intersection entre l'arrangement de fils et la structure de renfort. A titre d'exemple non limitatif, le module d'élasticité d'un tel mélange peut atteindre ou même dépasser 15 ou 20 Mpa, et même dans certains cas atteindre, voire dépasser 40 Mpa.

Il est aussi possible d'utiliser les différents éléments de la présente invention avec un agencement traditionnel de nappe carcasse dont la base est partiellement enroulée ou retournée, au niveau du bourrelet, contre une tringle, habituellement constituée d'une pluralité de filaments agencés de façon à former un câble.

Les différents exemples présentés aux figures 1 à 9 permettent d'illustrer le moyen anti-vibration 11 selon l'invention. Ce moyen anti-vibration s'étend sensiblement radialement de préférence entre la région de l'épaule vers la région du flanc. Il comprend au moins un arrangement de fils 14 s'étendant sensiblement circonférentiellement.

Ce moyen anti-vibration est particulièrement adapté pour un pneumatique de type deux roues, tel que pour une motocyclette ou un scooter, ce genre de véhicule étant plus exposé au phénomène du shimmy qu'un véhicule tel une voiture ou un camion, simplement par la conception même du véhicule deux roues, plus sensible aux phénomène de vibrations ou de déséquilibres.

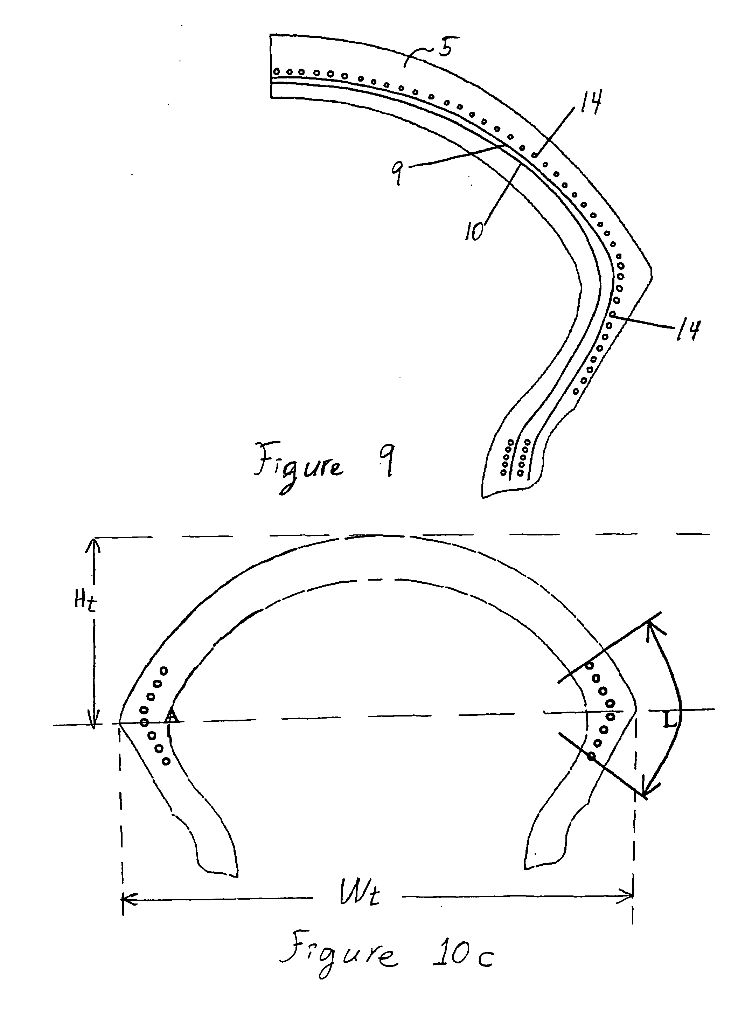

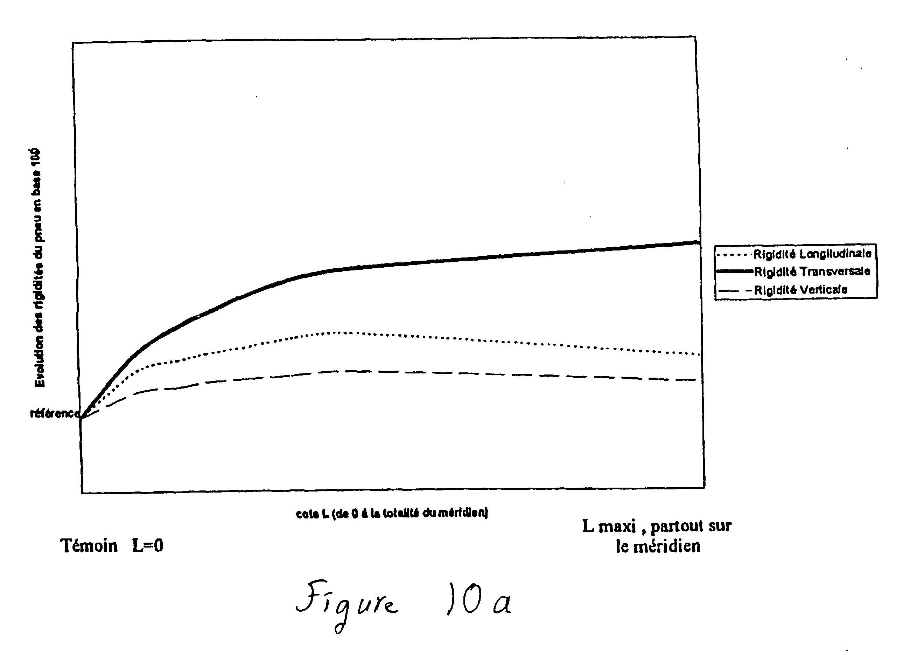

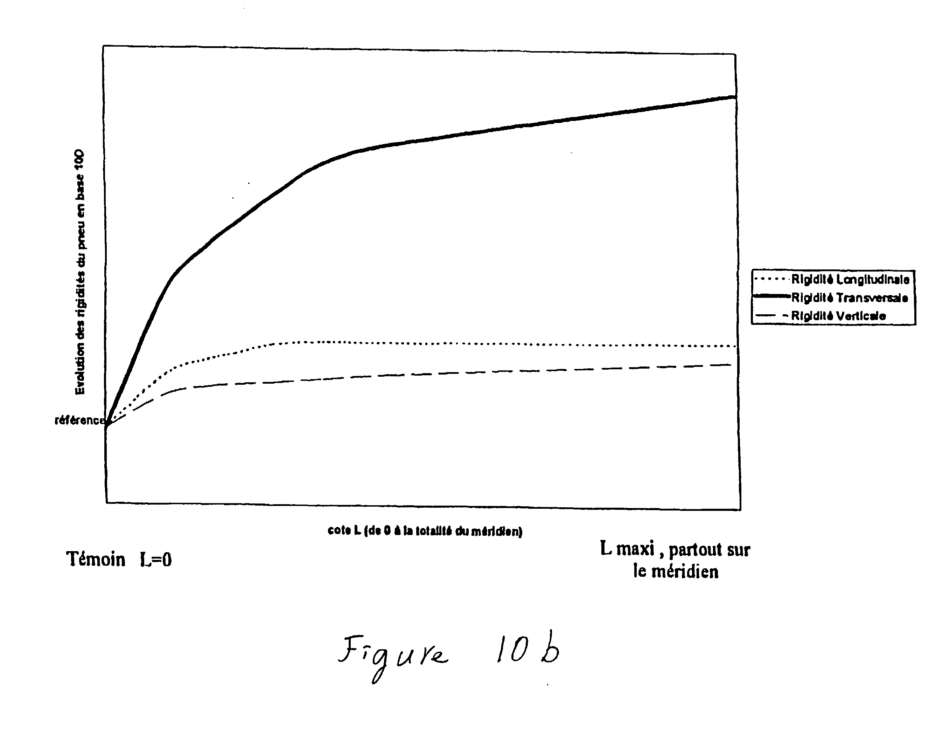

L'invention prends également en considération les importantes spécificités du pneumatique destiné à un véhicule motorisé à deux roues tel une motocyclette ou un scooter ou un vélomoteur. Par exemple, un tel pneumatique dispose habituellement d'une bande de roulement s'étendant, dans un plan méridien, entre les deux points définissant la plus grande distance axiale. Etant donné les angles fortement inclinés susceptibles d'être générés par exemple lors de virages à haute vitesse, la bande de roulement du pneumatique pour véhicule deux roues dispose également d'une forme « arquée » ou arrondie, avec un rapport Ht/Wt en général supérieur à 0.15 et de préférence supérieur à 0.3, caractéristique de ce type de pneumatique. Le rapport Ht/Wt représente le rapport entre la hauteur de la bande de roulement et sa largeur, tel qu'illustré à la figure 10C. Ces caractéristiques font que, par exemple, la jonction entre le sommet et le flanc d'un pneumatique pour véhicule deux roues n'est ni positionnée ni configurée de la même façon que pour un pneumatique pour véhicule à quatre roues ou plus.

Les arrangements de fils 14 peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, formant une superposition d'anneaux de diamètres progressivement croissants. Il n'est pas nécessaire d'ajouter un mélange de caoutchouc pour assurer l'imprégnation du fil de renfort ou des enroulements circonférentiels de fil. L'agencement de fils peut se prolonger sensiblement radialement le long du flanc et ou de l'épaule ou sur une portion de ceux-ci.

Dans l'exemple de la figure 1, le pneumatique comprend un agencement de fils 14 constitué d'une pile de fils juxtaposés. Elles sont avantageusement disposées à proximité immédiate de la structure de renfort 10. La structure illustrée à la figure 1 est particulièrement simplifiée et simple à réaliser. L'agencement est préférentiellement positionné ou aligné radialement au niveau de la zone de transition 12 du pneumatique, c'est-à-dire la zone où s'arrête la bande de roulement et où commence le flanc. Pour les pneumatiques pour véhicules deux roues, c'est en effet cette zone qui correspond en général à la distance radiale la plus grande du profil méridien. De préférence, tel qu'illustré dans l'exemple de la figure 1, les fils sont sensiblement également répartis radialement des deux côtés de la zone de transition 12 du pneumatique. Par ailleurs, dans ce même exemple, les fils 14 sont avantageusement disposés axialement extérieurement par rapport à la structure de renfort 10.

Selon plusieurs variantes avantageuses, le nombre d'enroulements, l'écartement radial, et la position radiale de l'agencement peuvent varier selon une infinité de possibilités. Ces caractéristiques sont définies en fonction du comportement vibratoire recherché, du type de véhicule et des conditions d'utilisation de ce dernier.

Les figures suivantes (figures 2 à 9) illustrent des modes de réalisation de l'invention comportant de préférence deux structures de renfort de type carcasse 9 et 10. Par exemple, la figure 2 illustre un mode de réalisation comparable à l'exemple de la figure 1, mais comportant deux structures de renfort de type carcasse ancrées dans le bourrelet 1. Les angles de ces structures peuvent par exemple être variables du sommet 5 vers l'équateur 12 et également vers la zone basse ou bourrelet du pneumatique.

En agissant sur la nature des fils 14, leur pas, leur position, leur angle, etc, la rigidité du pneumatique peut être modifiée, ce qui peut permettre d'atteindre des compromis de rigidité originaux. Par exemple, le découplage des rigidités verticales, latérales et de dérive permet de nouveaux compromis de performance dans les domaines du shimmy, mais aussi du comportement en général, du confort, de l'usure et de l'endurance.

La variante illustrée à la figure 3 se distingue par le fait que le moyen anti-vibration 11 est disposé entre les structures de renfort de type carcasse 9 et 10.

La variante illustrée à la figure 4 se distingue par le fait que le moyen anti-vibration 11 est dédoublé sur au moins une portion du profil du pneumatique, ou, en d'autres termes, que le côté du pneumatique dispose de deux moyens anti-vibration 11 disposés soit entre les structures de renfort de type carcasse 9 et 10, soit d'un côté ou de l'autre des renforts 9 ou 10. Un tel dédoublement peut permettre de mettre une certaine emphase sur certaines propriétés de sorte que le bénéfice obtenu par certains des avantages préalablement cités puissent être encore augmenté.

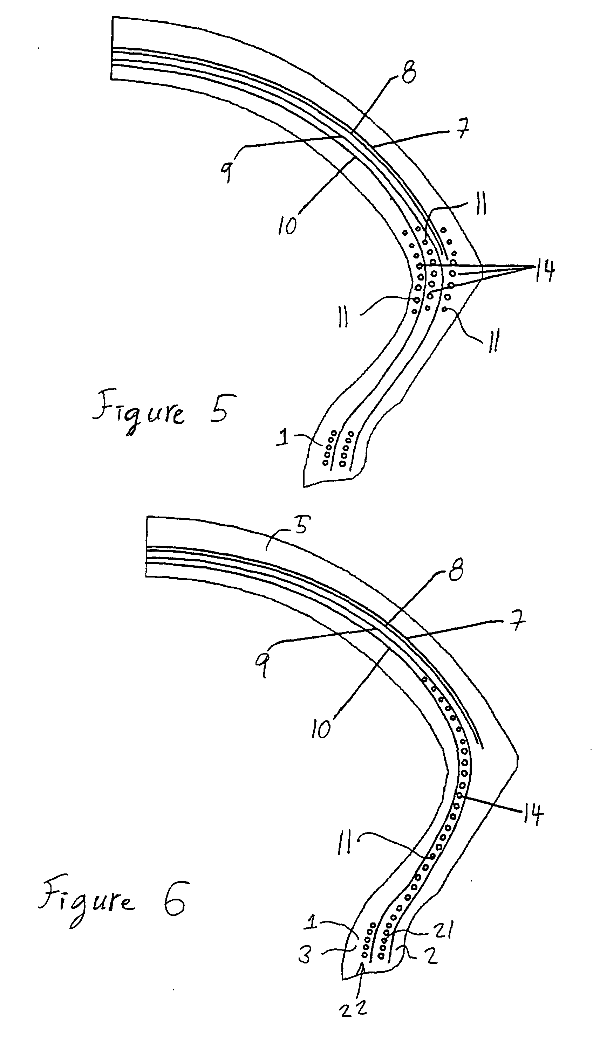

La variante illustrée à la figure 5 se distingue par le fait que le moyen anti-vibration 11 est triplé sur au moins une portion du profil du pneumatique, ou, en d'autres termes, que le côté du pneumatique dispose de trois moyens anti-vibration 11 disposés d'une part entre les structures de renfort de type carcasse 9 et 10, et d'autre part, du côté axialement interne de la structure la plus interne 10 et du côté axialement externe de la structure la plus externe 9.

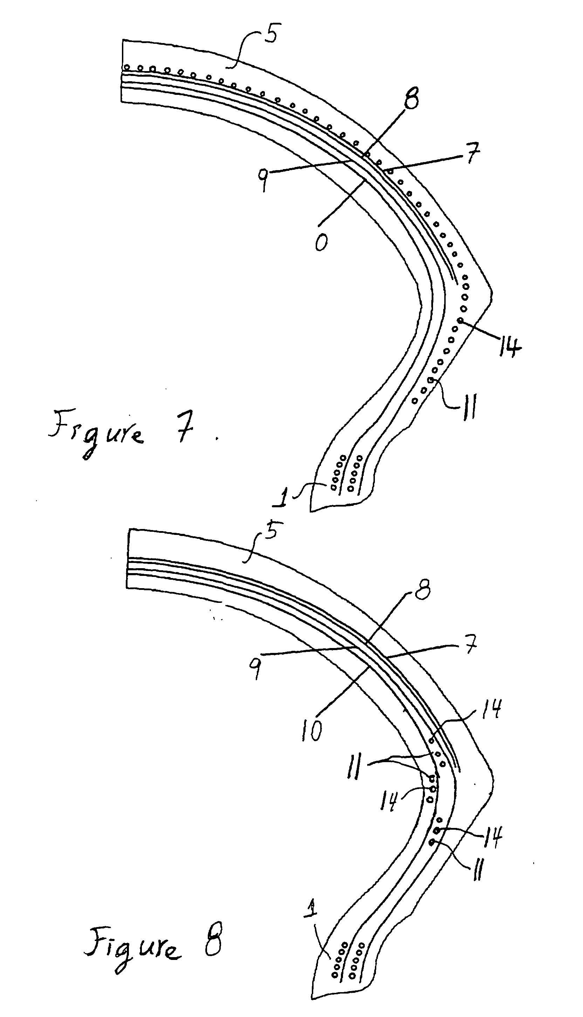

Les figures 6 et 7 illustrent des variantes dans lesquelles les enroulements filaires du moyen anti-vibration 11 se prolongent respectivement radialement intérieurement jusqu'au bourrelet dans le cas de la figure 6 et radialement extérieurement jusqu'à la portion médiane du sommet 5, dans le cas de la figure 7. Dans le premier de ces deux cas, lorsque l'ancrage de la structure de renfort de type carcasse est réalisé au moyen de fils circonférentiels 21 disposés à proximité immédiate de la structure de renfort en coopération avec un mélange caoutchoutique de haut module (comme par exemple supérieur à 15, voire même à 40 Mpa), les fils 14 du moyen anti-vibration 11 peuvent être disposés de façon à former un alignement sensiblement radial en continuité avec un alignement de la zone d'ancrage.

Dans le second cas (figure 7) les fils circonférentiels disposés dans la zone médiane du sommet 5 contribuent à conférer une plus grande résistance à la centrifugation.

La figure 8 illustre une autre variante dans laquelle les fils 14 du moyen 11 sont disposés en alternance de chaque côté d'une structure de renfort 10 ou 9. Dans l'exemple illustré, en se déplaçant radialement vers le haut, on note une alternance avec tout d'abord trois enroulements entre les deux structures 9 et 10, trois enroulements radialement intérieurs, puis à nouveaux trois enroulements entre les structures 9 et 10. Bien sur, de multiples variantes de cet exemple peuvent être réalisées, en changeant par exemple le nombre de fils de chaque série, en utilisant des nombres différents de fils et/ou de séries de fils, etc. L'alternance peut aussi être réalisée avec une seule structure de renfort 10 ou encore de part et d'autre de plusieurs structures.

La figure 9 illustre une variante de la forme d'exécution de la figure 7, dans laquelle on a réalisé une suppression des nappes de sommet 7 et 8. La présence de fils 14 jusque dans la portion médiane du sommet, permet d'assurer les caractéristiques requises tant au niveau de la résistance que des performances. Les structures de renfort 9 et 10 peuvent présenter un angle de croisement donné.

Les figures 10a et 10b présentent des graphiques montrant l'évolution des rigidités du pneumatique (en base 100) en fonction de la distance circonférentielle L entre les fils extrêmes du moyen anti-vibration. Cette cote est illustrée à la figure 10c. Ces résultats sont basés sur une étude de pneumatique pour véhicule de type deux roues comportant des nappes croisées au sommet.

La figure 10a représente l'évolution pour un pneumatique avec des fils 14 à base d'aramide tandis que la figure 10b représente l'évolution pour un pneumatique avec des fils 14 à base d'acier. Ces graphiques illustrent clairement la déconnexion entre les différents types de rigidités. Ainsi, en fonction de la longueur L, on peut obtenir une augmentation de la rigidité transversale du pneumatique, tout en conservant une certaine stabilité des rigidités du pneumatique dans les deux autres directions (verticales et longitudinales). Cet effet est plus marquant encore avec l'utilisation de fils de type acier (figure 10b) qu'avec des fils de type aramide (figure 10a).

D'autres paramètres peuvent également influencer le réglage, comme par exemple la qualité des mélanges caoutchoutiques, la densité des fils, etc. Grâce à ces évolutions différentes des rigidités, il devient possible de doser les paramètres afin d'améliorer le compromis de performance globale du pneumatique dans les domaines du comportement et du confort qui présentent une importance particulière pour les pneumatiques destinés à des véhicules de type deux roues. Notamment, il est possible d'améliorer considérablement les aptitudes du pneumatique en regard du shimmy, sans compromettre le confort ou d'autres performances du pneumatique.

Selon une autre variante non illustrée, le pneumatique comporte une zone de mélange caoutchoutique de liaison disposée sur au moins une portion du parcours des arrangements de fils. Ce mélange est avantageusement disposé de façon à être en contact direct d'une part avec au moins une portion du moyen anti-vibration et d'autre part avec une portion sensiblement voisine de structure de renfort de type carcasse. Il s'agit de préférence d'un mélange caoutchoutique à sensiblement haut module (comme par exemple un module supérieur à 15 Mpa ou même plus). Le mélange de liaison permet d'optimiser la coopération entre l'amorce du sommet et la portion sensiblement voisine du flanc. Dans les configurations traditionnelles où les fils sont appliqués sous forme de nappes, (fil imprégné dans une couche de mélange caoutchoutique), il en résulte une mince couche intermédiaire de mélange à plus faible module qui se trouve entre le mélange à haut module et la portion de structure de renfort. Avec le contact direct, donc sans la présence de cette couche mince de mélange à plus faible module, l'impact de la présence du mélange à haut module dans la zone est amplifié. En effet, la traditionnelle couche mince à plus faible module engendre des pertes d'énergies, qui peuvent occasionner une détérioration des propriétés mécaniques.

En modifiant l'épaisseur de la zone et/ou en utilisant un mélange avec un module plus ou moins élevé, on peut obtenir un pneumatique avec les caractéristiques souhaitées, adaptées pour l'usage prévu.

## Revendications

1. Pneumatique pour véhicule à deux roues comportant au moins une structure de renfort de type carcasse (9,10) ancrée de chaque côté du pneumatique dans un bourrelet (1) dont la base est destinée à être montée sur un siège de jante, chaque bourrelet (1) se prolongeant radialement vers l'extérieur par un flanc (6), la structure de renfort s'étendant circonférentiellement depuis les bourrelets (1) vers lesdits flancs (6), les flancs (6) rejoignant radialement vers l'extérieur une bande de roulement dont le rapport Ht/Wt est supérieur à 0.15,une zone d'ancrage de la structure de renfort, une zone de transition (12) correspondant sensiblement au passage de la portion latérale de la bande de roulement au flanc, **caractérisé en ce qu'**un moyen anti-vibration (11) est disposé circonférentiellement dans ladite zone de transition (12) et s'étend radialement d'une part sensiblement radialement extérieurement vers le sommet et d'autre part sensiblement radialement intérieurement dans le flanc, ledit moyen anti-vibration (11) comprenant au moins un alignement de fils (14) sensiblement circonférentiels.

2. Pneumatique selon la revendication 1, dans lequel ledit moyen anti-vibration (11) assure une connexion mécanique entre la portion latérale de la bande de roulement et la portion du flanc dans lesquelles ledit moyen est disposé.

3. Pneumatique selon l'une des revendications 1 ou 2, dans lequel ledit alignement comprend un seul fil.

4. Pneumatique selon l'une des revendications 1 ou 2, dans lequel ledit alignement comporte plusieurs fils.

5. Pneumatique selon l'une des revendications précédentes, comportant au moins un agencement de fils (21) suivant un parcours sensiblement circonférentiel, disposé de façon sensiblement adjacente à ladite structure de renfort (9,10) au niveau du bourrelet (1).

6. Pneumatique selon l'une des revendications précédentes, dans lequel le sommet comporte une série de fils disposés sensiblement à zéro degré.

7. Utilisation d'un moyen anti-vibration (11) substantiellement périphérique pour diminuer la génération de vibrations de type shimmy dans un pneumatique pour véhicule à deux roues comportant au moins une structure de renfort de type carcasse (9,10) ancrée de chaque côté du pneumatique dans un bourrelet (1) dont la base est destinée à être montée sur un siège de jante, chaque bourrelet (1) se prolongeant radialement vers l'extérieur par un flanc (6), les flancs rejoignant radialement vers l'extérieur une bande de roulement dont le rapport Ht/Wt est supérieur à 0.15, la structure de renfort s'étendant circonférentiellement depuis les bourrelets (1) vers lesdits flancs (6), ledit pneumatique comportant également une zone de transition (12) correspondant sensiblement au passage de la portion latérale de la bande de roulement au flanc, ledit moyen anti-vibration (11) étant disposé circonférentiellement dans ladite zone de transition et s'étendant radialement d'une part sensiblement radialement extérieurement vers le sommet et d'autre part sensiblement radialement intérieurement dans le flanc et ledit moyen anti-vibration (11) comprenant au moins un alignement de fils (14) sensiblement circonférentiels.

8. Utilisation selon la revendication 7, d'un moyen anti-vibration substantiellement périphérique pour diminuer la génération de vibrations de type shimmy dans un pneumatique dans lequel ledit moyen anti-vibration (11) assure une connexion mécanique entre la portion latérale de la bande de roulement et la portion du flanc dans lesquelles ledit moyen est disposé.

## Claims

1. A tyre for a two-wheeled vehicle, comprising at least one reinforcement structure of carcass type (9, 10) anchored on either side of the tyre in a bead (1) the base of which is intended to be mounted on a rim seat, each bead (1) being extended radially towards the outside by a sidewall (6), the reinforcement structure extending circumferentially from the beads (1) towards said sidewalls (6), the sidewalls (6) joining radially towards the outside a tread the Ht/Wt ratio of which is greater than 0.15, an anchoring zone for the reinforcement structure, a transition zone (12) corresponding substantially to the change from the lateral portion of the tread to the sidewall, **characterised in that** an anti-vibration means (11) is arranged circumferentially in said transition zone (12) and extends radially on one hand substantially radially externally towards the crown and on the other hand substantially radially internally in the sidewall; said anti-vibration means (11) comprising at least one alignment of substantially circumferential cords (14).

2. A tyre according to Claim 1, in which said anti-vibration means (11) provides a mechanical connection between the lateral portion of the tread and the portion of the sidewall in which said means is arranged.

3. A tyre according to one of Claims 1 or 2, in which said alignment comprises a single cord.

4. A tyre according to one of Claims 1 or 2, in which said alignment comprises a plurality of cords.

5. A tyre according to one of the preceding claims, comprising at least one arrangement of cords (21) along a substantially circumferential path, arranged substantially adjacent to said reinforcement structure (9, 10) at the level of the bead (1).

6. A tyre according to one of the preceding claims, in which the crown comprises a series of cords which are arranged substantially at zero degrees.

7. The use of a substantially peripheral anti-vibration means (11) to reduce the generation of vibrations of the shimmy type in a tyre for a two-wheeled vehicle comprising at least one reinforcement structure of carcass type (9, 10) anchored on either side of the tyre in a bead (1) the base of which is intended to be mounted on a rim seat, each bead (1) being extended radially towards the outside by a sidewall (6), the sidewalls joining radially towards the outside a tread, the Ht/Wt ratio of which is greater than 0.15, the reinforcement structure extending circumferentially from the beads (1) towards said sidewalls (6), said tyre also comprising a transition zone (12) corresponding substantially to the change from the lateral portion of the tread to the sidewall, said anti-vibration means (11) being arranged circumferentially in said transition zone and extending radially on one hand substantially radially externally towards the crown and on the other hand substantially radially internally in the sidewall, and said anti-vibration means (11) comprising at least one alignment of substantially circumferential cords (14).

8. The use according to Claim 7 of a substantially peripheral anti-vibration means to reduce the generation of vibrations of the shimmy type in a tyre, in which said anti-vibration means (11) provides a mechanical connection between the lateral portion of the tread and the portion of the sidewall in which said means is arranged.

## Patentansprüche

1. Luftreifen für ein zweirädriges Fahrzeug, der mindestens eine Verstärkungsstruktur vom Typ Karkasse (9, 10), die an jeder Seite des Luftreifens in einem Wulst (1) verankert ist, dessen Basis dazu bestimmt ist, auf einen Felgensitz montiert zu werden, wobei jeder Wulst (1) sich radial nach außen in einer Flanke (6) verlängert, wobei die Verstärkungsstruktur sich in Umfangsrichtung von den Wülsten (1) zu den Flanken (6) erstreckt, wobei die Flanken (6) radial nach außen an eine Lauffläche anschließen, deren Ht/Wt-Verhältnis größer als 0,15 ist, eine Verankerungszone für die Verstärkungsstruktur, und eine Übergangszone (12) aufweist, die im Wesentlichen dem Übergang vom seitlichen Abschnitt der Lauffläche zur Flanke entspricht, **dadurch gekennzeichnet, dass** eine vibrationshemmende Einrichtung (11) in Umfangsrichtung in der Übergangszone (12) angeordnet ist und sich radial einerseits im Wesentlichen radial außen zum Scheitel und andererseits im Wesentlichen radial in der Flanke erstreckt, wobei die vibrationshemmende Einrichtung (11) mindestens eine fluchtende Anordnung von im Wesentlichen in Umfangsrichtung verlaufenden Fäden (14) aufweist.

2. Luftreifen nach Anspruch 1, bei dem die vibrationshemmende Einrichtung (11) eine mechanische Verbindung zwischen dem seitlichen Abschnitt der Lauffläche und dem Abschnitt der Flanke gewährleistet, in denen die Einrichtung angeordnet ist.

3. Luftreifen nach einem der Ansprüche 1 oder 2, bei dem die fluchtende Anordnung einen einzigen Faden aufweist.

4. Luftreifen nach einem der Ansprüche 1 oder 2, bei dem die fluchtende Anordnung mehrere Fäden aufweist.

5. Luftreifen nach einem der vorhergehenden Ansprüche, der mindestens eine Anordnung von Fäden (21) mit einem Verlauf im Wesentlichen in Umfangsrichtung aufweist, die im Wesentlichen in Höhe des Wulsts (1) an die Verstärkungsstruktur (9, 10) angrenzend angeordnet ist.

6. Luftreifen nach einem der vorhergehenden Ansprüche, bei dem der Scheitel eine Reihe von Fäden aufweist, die im Wesentlichen in einem Winkel von Null Grad angeordnet sind.

7. Verwendung einer im wesentlichen in Umfangsrichtung angeordneten, vibrationshemmenden Einrichtung (11) zur Verringerung der Erzeugung von Vibrationen von der Art Radflattern in einem Luftreifen für zweirädrige Fahrzeuge, der mindestens eine Verstärkungsstruktur von der Art Karkasse (9, 10) aufweist, die auf jeder Seite des Luftreifens in einem Wulst (1) verankert ist, dessen Basis dazu bestimmt ist, auf einen Felgensitz montiert zu werden, wobei jeder Wulst (1) sich radial nach außen in einer Flanke (6) verlängert, wobei die Flanken radial nach außen an eine Lauffläche anschließen, deren Ht/Wt-Verhältnis größer als 0,15 ist, wobei die Verstärkungsstruktur sich in Umfangsrichtung von den Wülsten (1) zu den Flanken (6) erstreckt, wobei der Luftreifen auch eine Übergangszone (12) aufweist, die im wesentlichen dem Übergang des Seitenabschnitts der Lauffläche zur Flanke entspricht, wobei die vibrationshemmende Einrichtung (11) in Umfangsrichtung in der Übergangszone angeordnet ist und sich radial einerseits im Wesentlichen radial außen zum Scheitel und andererseits im Wesentlichen radial innen in der Flanke erstreckt, und die vibrationshemmende Einrichtung (11) mindestens eine fluchtende Anordnung von im wesentlichen in Umfangsrichtung verlaufenden Fäden (14) enthält.

8. Verwendung nach Anspruch 7 einer im wesentlichen in Umfangsrichtung verlaufenden vibrationshemmenden Einrichtung zur Verringerung der Erzeugung von Vibrationen von der Art Radflattern bei einem Luftreifen, bei dem die vibrationshemmende Einrichtung (11) eine mechanische Verbindung zwischen dem seitlichen Abschnitt der Lauffläche und dem Abschnitt der Flanke gewährleistet, in denen die Einrichtung angeordnet ist.
